# EUROPEAN PATENT APPLICATION

(11) **EP 0 852 350 A2**
(43) Date of publication of application: **08.07.1998**
(21) Application number: 98300060.5
(22) Date of filing: 06.01.1998
(51) Int. Cl.: G06F 1/18

(54) **A computer system having plug-in type modules**

(30) Priority: 06.01.1997 KR 9700095
(71) Applicant: Samsung Electronics Co., Ltd., Suwon City, Kyungki-do (KR)
(72) Inventor: Lee, Kyung-Sup, Suwon, Kyungki-do (KR)
(74) Representative: Tunstall, Christopher Stephen

(57) **Abstract**

A computer system for use with a module pack is described. The module includes the main components of the computer, in particular a separately formed CPU board and video adapter board, for upgrading system performance. The module is plugged into a module bay of the computer through a connector. The connector includes a first connector which couples the CPU board to the video board and a second connector that couples the CPU board and video board to the system main board. Also, the module includes a metal housing having a hole and a cooling fan attached to the hole. A locking device is installed in the module to prevent the module from being lost or stolen. This modular structure is especially useful for a portable computer. By simply exchanging the module, upgrading of the CPU and/or video adapter of a portable computer is possible. The cooling fan and the use of aluminum in the module housing can maximize heat dissipation of the CPU and video adapter boards within the module.

## Description

### BACKGROUND TO THE INVENTION

The present invention relates to computer systems having plug-in type modules. This invention is directed to a simple design of a computer system which contributes to easy upgrade of the main component parts of the computer, thus allowing easy enhancement of system performance.

Rapid technological developments in semiconductor devices have resulted in large-capacity computers being made smaller, leading to the appearance of the personal computer which may be portable for use anywhere and at any time. Typical portable computers include laptop computers, notebook computers and palmtop computers. However, the portable computer has inherent problems in providing versatility due to its smaller size. Some expansion boards such as video cards, sound card, etc. are often incorporated into the main board to save space and manufacturing cost. Another problem relating to its smaller size is the difficulty of providing user-serviceability as well as servicing by the manufacturer.

Furthermore, as the performance and scale of microprocessors have progressed and high-performance video adapters which enhance multimedia functions of the personal computer have appeared, the need has arisen in portable computers to allow continual upgrade of the microprocessor and video adapter. However, exchanging the microprocessor or central processing unit (CPU) on the main board of a portable computer is difficult and, if a video adapter is integrated within the main board, there is no way of changing to a new video adapter to increase video performance. Also, an upgraded microprocessor may generate excessive heat in the main board due to its extremely highspeed operation.

An attempt has been made to solve the above problems - see US Patent No. 5,539,616 entitled "Modular Portable Computer", in which an alternative design for a portable computer is described. The modular portable computer has a framework with module bays for receiving CPU modules, power modules and peripheral function modules such as floppy and hard disk drives. The framework has a built-in compressed bus and a variety of function modules which can be plugged into any one of the module bays.

Yet this modular structure portable computer is not provided with any countermeasure dissipating heat generated by CPU modules and it is relatively easy for a module to be lost or stolen. Also, implementing this structure requires extensive changes in system design since it uses a unique electronic architecture adopting a so-called "Notebus" structure.

### SUMMARY OF THE INVENTION

It is therefore an objective of the present invention to provide an improved computer system having a simple structure.

Accordingly, the present invention provides a computer system comprising a power supply unit, a main board including memory, a system bus and an I/O controller, a CPU board including chipsets and BIOS ROM, a video board including a video controller and video memory and means for electrically connecting the CPU board and the video board to the main board, in which one or both of the CPU board and the video board are incorporated into a module adapted to dock with and detachable from a module bay of the computer system. The main board may further include a disk controller.

Preferably, the connecting means includes a first connector adapted to couple the CPU board to the video board and a second connector adapted to couple the CPU board and video board to the main board. Preferably, one or both of the CPU board and the video board are directly coupled to the system bus of the main board through the connecting means. Furthermore, one or both of the CPU board and the video board are supplied with their required operating voltages through the connection means.

Preferably, the module has a metal housing in which one or both of the CPU board and the video board are housed, an opening is formed in a surface of the housing and a heat dissipation device, such as a cooling fan, is mounted on the opening.

The module may include a locking device adapted to lock the module in place when it is docked with the module bay of the computer system. The locking device may include a screw which is adapted to be inserted into the module through a part of the computer system and in which a specially shaped groove is formed in a head portion of the screw. The locking device may include a key-operated lock installed in the module.

The advantage of the present invention is that by simply exchanging the module, upgrading of one or both of the CPU and the video adapter of the computer system is possible. The cooling fan and the use of aluminium in the module housing can maximise the dissipation of heat generated by the CPU and video adapter boards within the module.

### BRIEF DESCRIPTION OF THE DRAWINGS

The present invention will now be described by way of example with reference to the accompanying drawings in which:
Fig. 1 depicts a computer main board of a portable computer;
Fig. 2 is an exploded view of a conventional way of mounting a PGA type central processing unit;
Fig. 3 is an exploded view of a conventional way of mounting a TCP type central processing unit;
Fig. 4 is a perspective view of a cooling fan mounted onto a central processing unit of a conventional desktop computer;
Fig. 5 is a perspective view showing a heat sink mounted on a central processing unit of a conventional desktop computer;
Fig. 6 is a block diagram of a conventional portable computer system;
Fig. 7 is an exploded perspective view showing a conventional portable computer when disassembled;
Fig. 8 is a perspective view of a module detached from a portable computer, in which the module includes the main components of the portable computer in accordance with the present invention;
Fig. 9 is a perspective view of a module which contains a CPU, a video adapter and a cooling fan mounted on the top of the housing;
Fig. 10 is a side view of the combination of a CPU board and a video adapter board installed within the module shown in Fig. 9;
Fig. 11 is a schematic plan view showing the module in accordance with the present invention plugged into the main board of a portable computer;
Fig. 12 is a block diagram depicting a portable computer system to which the module having a CPU and a video adapter;
Fig. 13 is a perspective view of a locking device for the module in which specially shaped screws are used to fix the module within the main body of the portable computer;
Fig. 14 is an enlarged perspective view showing the specially shaped screws;
Fig. 15 is a perspective view of another locking device installed at the front of the module, in which a lock and key are used to fix the module within the main body of the computer; and
Fig. 16 is an elevation of the module incorporated into the portable computer, illustrating the operation of the locking device shown in Fig. 15.

### DETAILED DESCRIPTION OF THE INVENTION

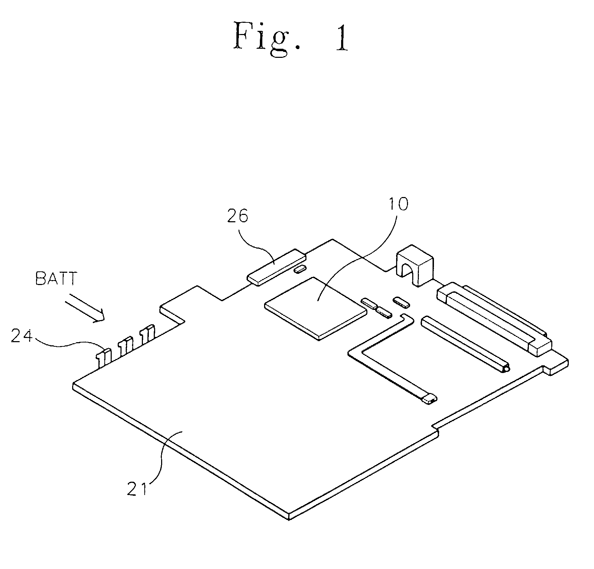

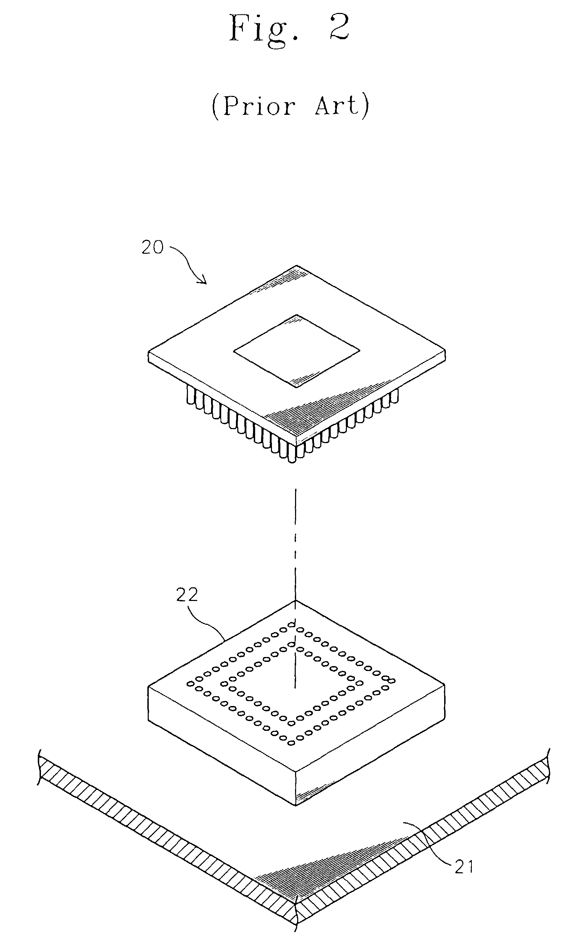

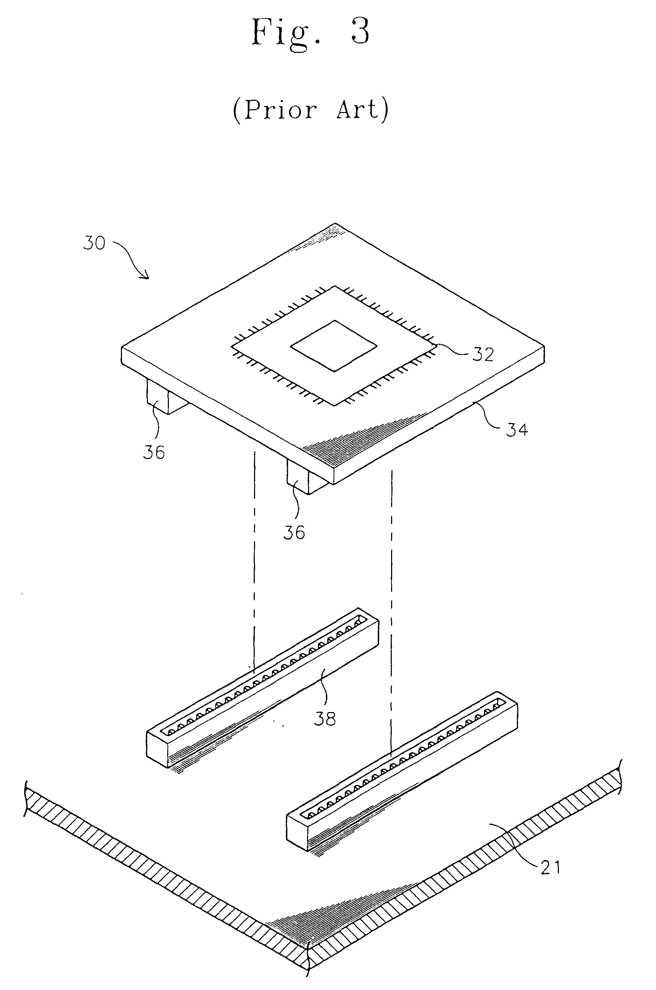

Fig. 1 shows a main board 21 for use in a portable computer. The main board 21 is provided with a CPU 10 and lots of electronic components. Also provided are connectors or ports 26 to be used in coupling to peripheral devices such as disk drives. Terminals 24 are positioned to contact with battery terminals. The CPU 10 is usually mounted on the main board 21 by way of a connector or socket. As shown in Figs. 2 and 3, the sockets 22 and 38 are of different dimensions and shape to receive different type of CPU. In Fig. 2, CPU 20 denotes a PGA (Pin Grid Array) package type CPU and in Fig. 3, 30 denotes a TCP (Tape Carrier Package) type.

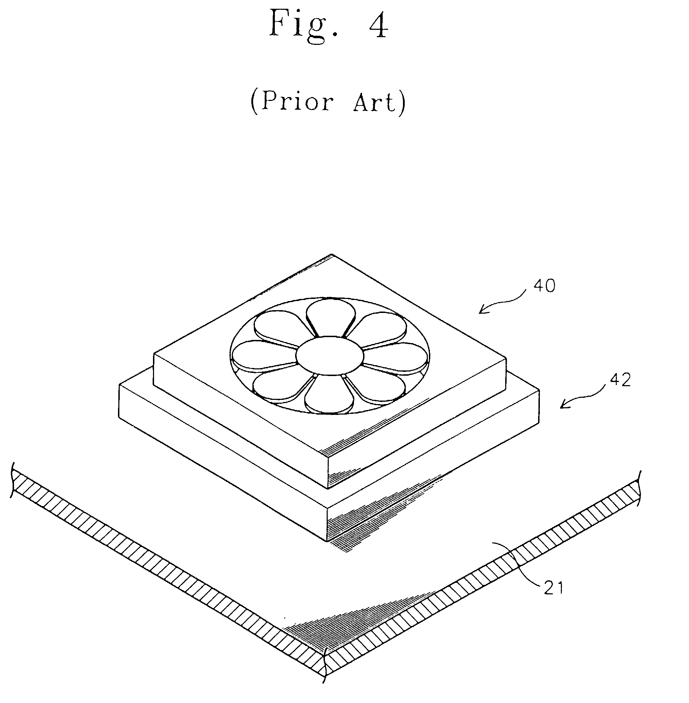

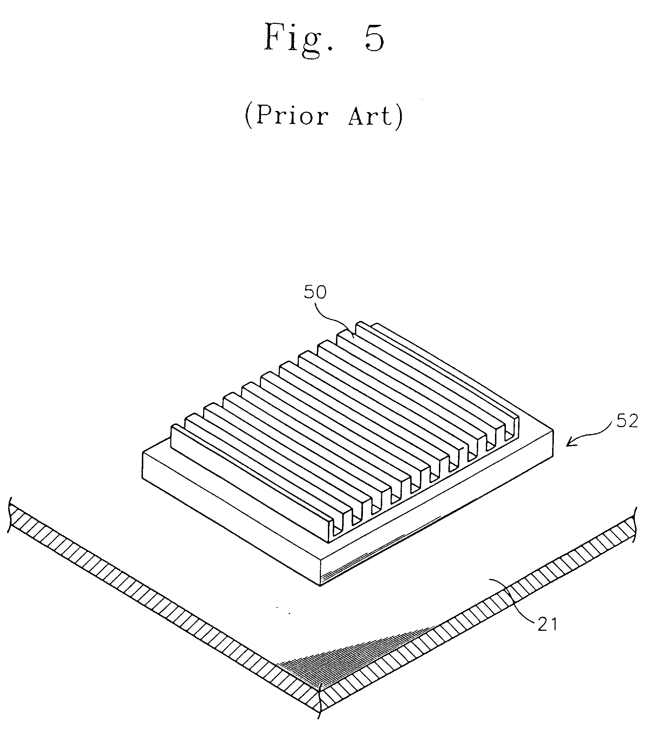

Usually, modern CPUs use a heat dissipation device to prevent overheating of the CPU during operation. Such heat dissipation may be provided by use of a heat sink, a heat pipe, a cooling fan, etc. Fig. 4 shows a cooling fan 40 mounted on the top surface of a CPU 42 and Fig. 5 shows a heat sink 50 is mounted on a CPU 52. These CPUs function as the controller of the computer in combination with other components and installed devices.

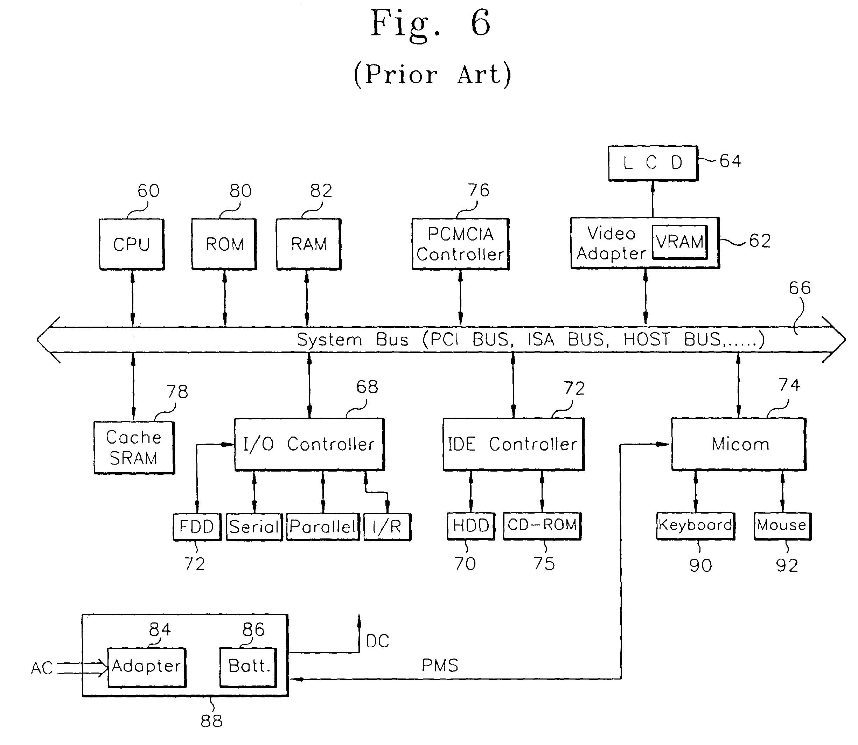

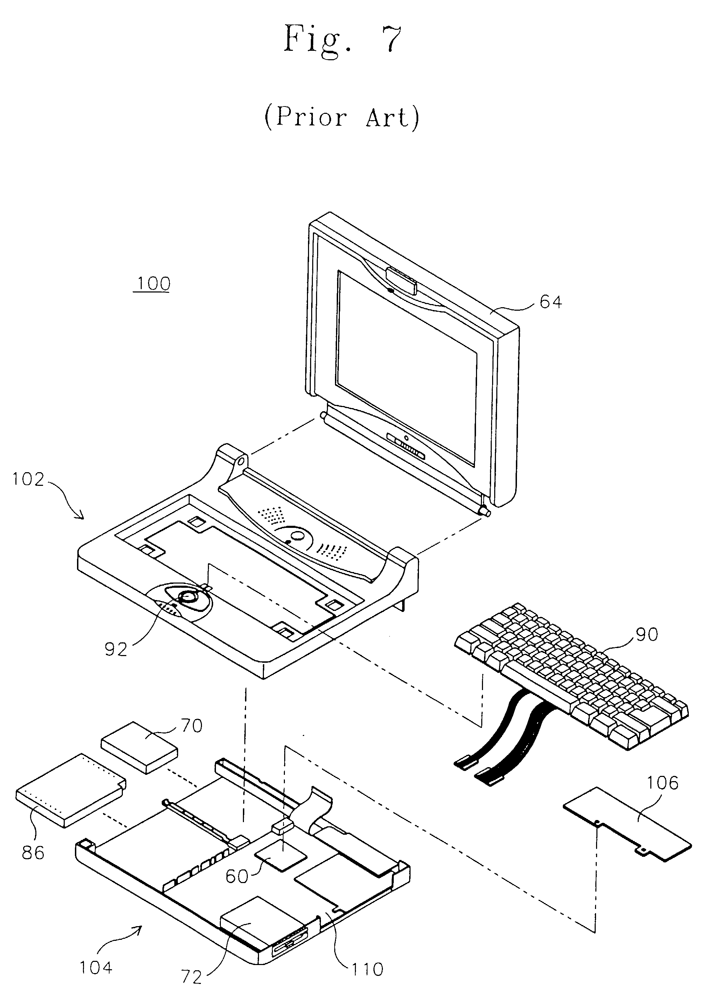

A detailed block diagram of a conventional portable computer is shown in Fig. 6. The CPU 60 is connected via system bus 66 with memories, ROM 80 and RAM 82, a cache 78, a video controller 62, an I/O controller 68, an IDE controller 72, a PCMCIA controller 76 and a power management system 74. In a portable computer, these components are usually incorporated into a system board or main board to reduce the size of the computer main body. Also, as shown in Fig. 7, a keyboard 90 and a mouse 92 are incorporated at the top 102 of the main body 104 and a LCD monitor 64 is hinged to the rear of the main body.

The main body 104 may house peripheral devices, for example FDD 72, HDD 70, CD-ROM drives and battery pack 86. External to the main body, a power adapter 88 is provided to supply DC power to the portable computer, as well as the battery 86, from an AC outlet. Reference numeral 100 denotes the entire portable computer and 106 denotes a heat sink mounted on the CPU 60.

In this arrangement, if a user wishes to upgrade the CPU 60, he must first detach the keyboard 90 from the top 102 of the main body 104 and remove the heat sink 106 from the CPU 60. Then, exchanging the CPU 60 for a new one is possible. However, disassembling and reassembling the above components may require special skill and it is somewhat difficult for a user to do. Furthermore, since the video adapter circuitry including the video controller 62 is incorporated into the main board 110, exchanging the video adapter for a new one is not possible even if the user wishes to enhance video performance.

The present invention provides a simple and easy structure of a portable computer designed such that the CPU and video adapter circuitry are separately formed into a plug-in type module which can be docked with the computer main board and exchangeable for a more advanced module.

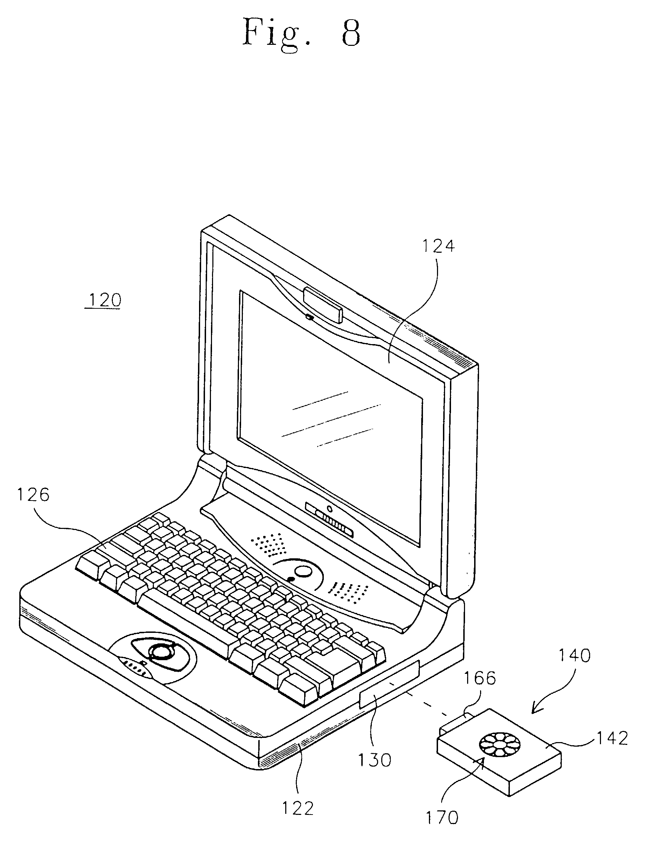

Fig. 8 shows an example of the module 140 that includes the CPU and video adapter circuitry in accordance with the invention. The module 140, therefore, will be referred to as a "CPU and video adapter module." The CPU and video adapter module 140 has a connector 166 which is plugged into a module bay 130 formed in a portable computer 120 to receive the module 140. Further, the module 140 includes a cooling fan 170 installed on top of the module housing 142. Preferably, the housing 142 is formed of aluminium and has an opening (not shown) at the centre of its cover on which the cooling fan 170 is mounted. Reference number 122 denotes a keyboard installed on the upper part of the computer main body 122. Reference number 124 denotes an LCD type monitor hinged at distal sides of the main body 122.

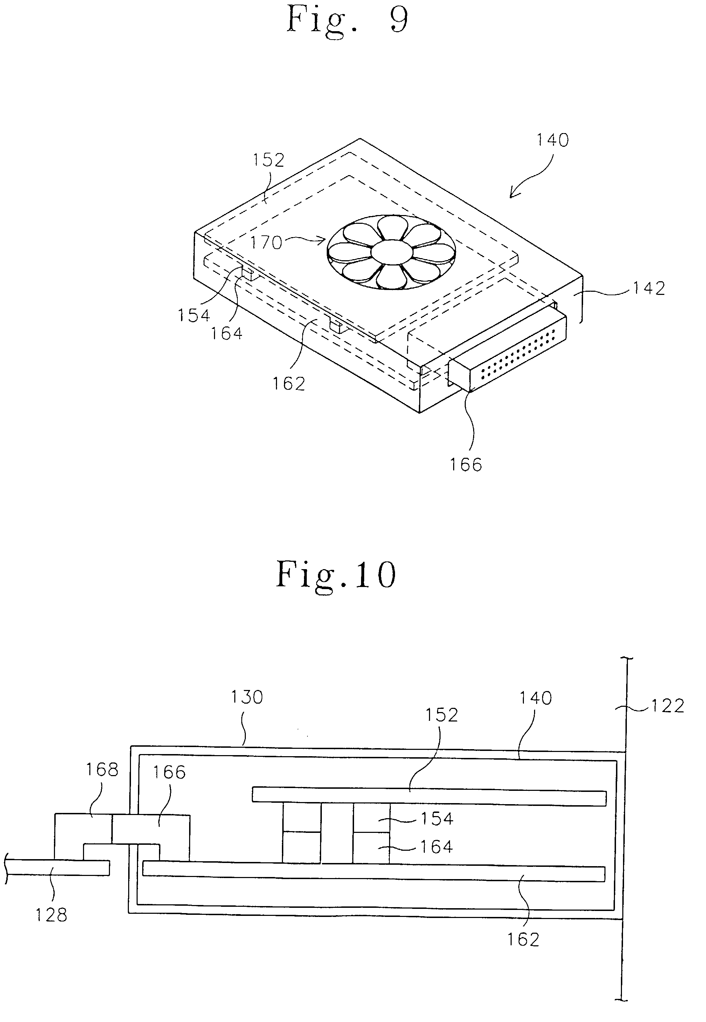

The detailed configuration of the CPU and video adapter module 140 can be seen in Figs. 9 and 10, in which a CPU board 152 and a video adapter board 162 are mounted within the housing 142. The CPU board 152 includes a CPU and its accompanying chipsets. The CPU board 152 may include BIOS ROM. Also, the video adapter board 162 includes a video controller and its accompanying components such as video RAM memories. Further, the CPU board 152 and video adapter board 162 are provided with connectors 154 and 164 arranged beneath the CPU board 152 and on the surface of the video adapter board 162, respectively. Connectors 154 and 164 are located in predetermined positions to face each other so that the CPU board 152 and the video adapter board 162 are coupled in the board assembly procedure. The connector 166 extending outside the housing 142 is mounted at a distal end of the video adapter board 162. A counterpart connector 168 is provided at one side of the main board 128.

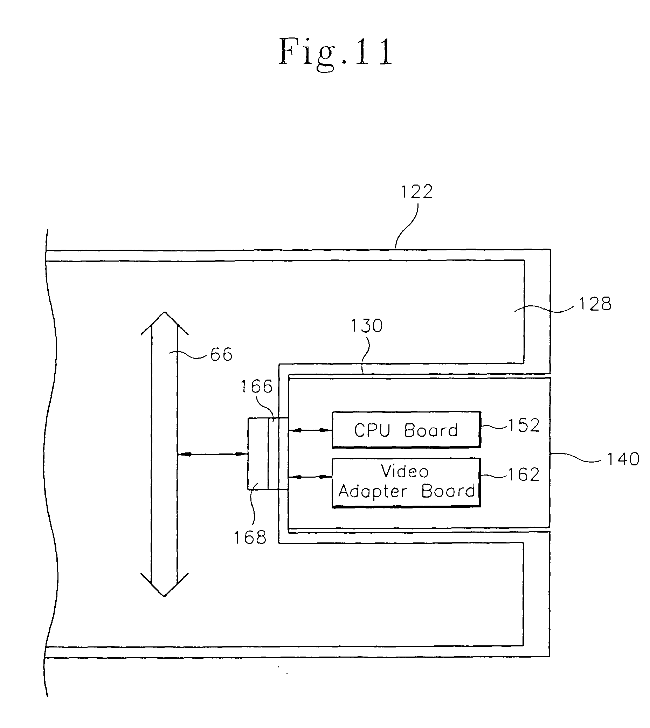

When the module 140 is received in the module bay 130 of the computer main body 122, and the coupling between connectors 166 and 168 is completed, there is established an electrical path between the CPU board 152 and video adapter board 162 as well as the boards 152, 162 in the module 140 and the main board 128 as shown in Fig. 11. In other words, when the module 140 is plugged in, the CPU board 152 is coupled to the system bus 66 of the main board 122 through the connectors 154, 164 and the video adapter board 162 is coupled to the system bus 66 of the main board 122 by the connectors 166, 168.

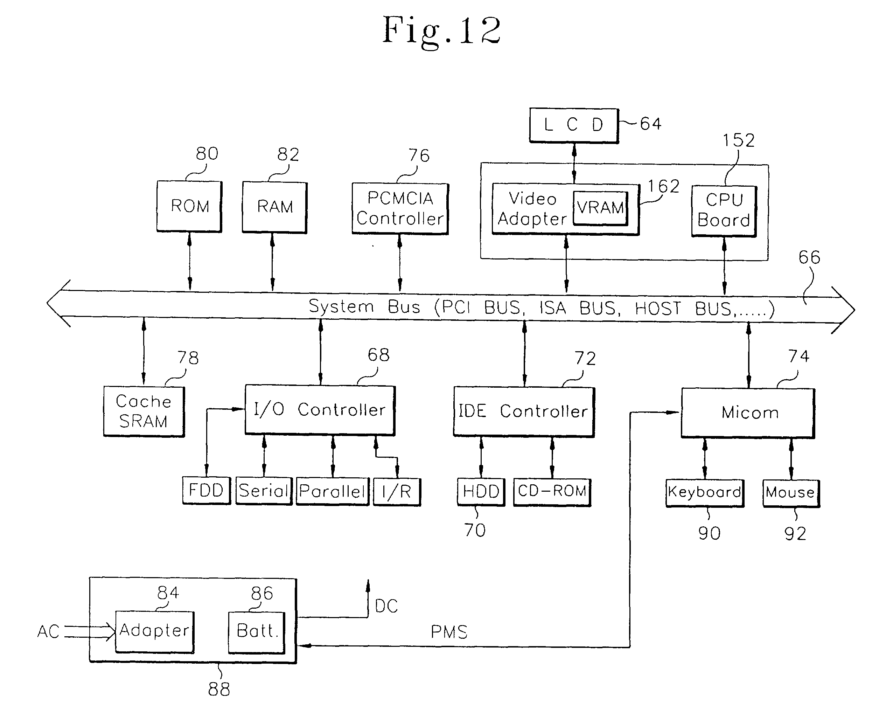

To make an electrical path between the main board 128 and the module 140, each connector has power supply lines, control signal lines, and address and data signal lines. Through the power supply lines of the connectors 154, 164, and 166, the CPU board 152 and video adapter board 162 are supplied with their required operating voltages from the main board 122. The control signal and the address signal fed from the CPU board 152 are supplied to the main board 122 through the control signal lines and address signal lines of the connectors. Also, the data signals are transferred between the main board 122 and the CPU and video adapter module 140 via the data signal lines of the connectors. Furthermore, the cooling fan 170 is operated with a supply voltage, for example +5 Volts supplied from the power supply lines of the connector 166. The circuit configuration of the portable computer using the CPU and video adapter module 140 is illustrated in Fig. 12.

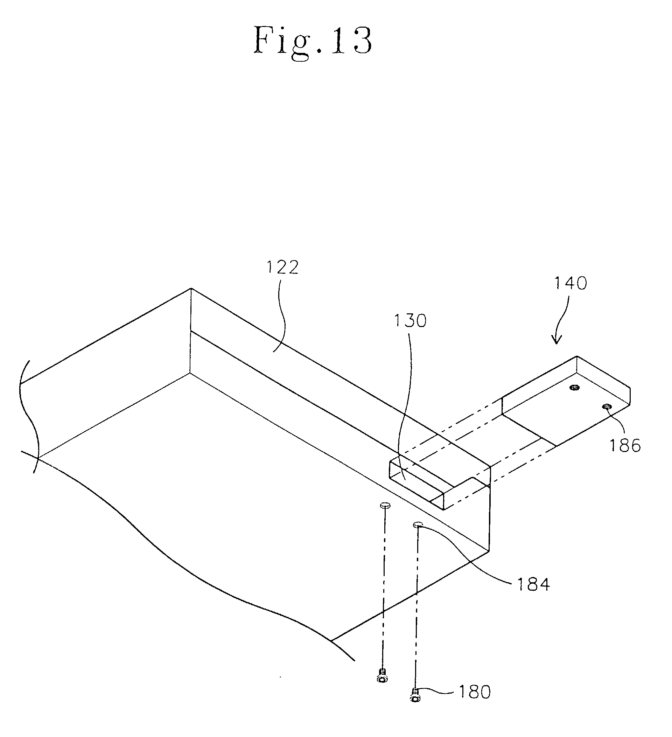

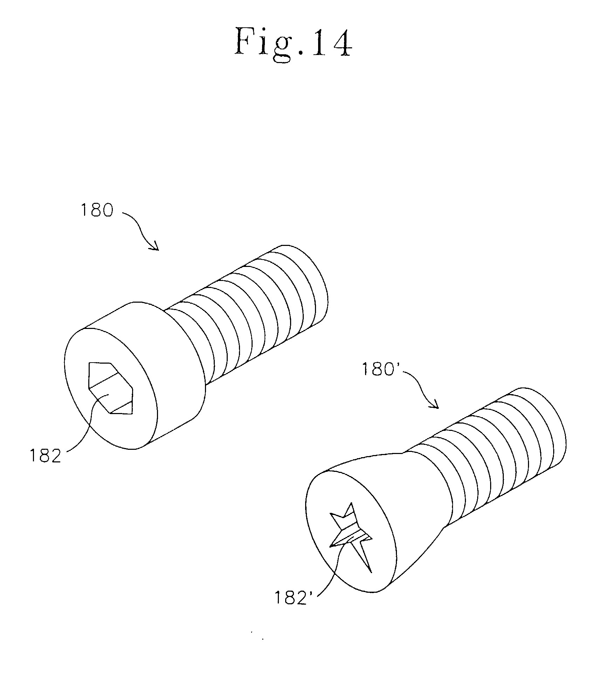

The CPU and video adapter module 140 preferably has a locking device. As shown in Fig. 13, the module 140 is provided with two threaded holes 186 underneath the module housing 142. Furthermore, corresponding holes 184 are formed under the main body 122 of the portable computer. A screw or screws 180 are provided to be coupled with the threaded hole 186 through the hole 184 of the main body. In particular, the screw 180 has a special shape such that the head includes, for example, a hexagonal or star shaped groove or recess 182, 182' as shown in Fig. 14. This special shaped head of the screw 180 is to restrict access using normal (i.e. flat-head or cross-head) screwdrivers.

Thus, when the module 140 is attached to the main body 122 by using those specially shaped screws 180 and 180', a locking device that prevents the module 140 from being lost or stolen is provided.

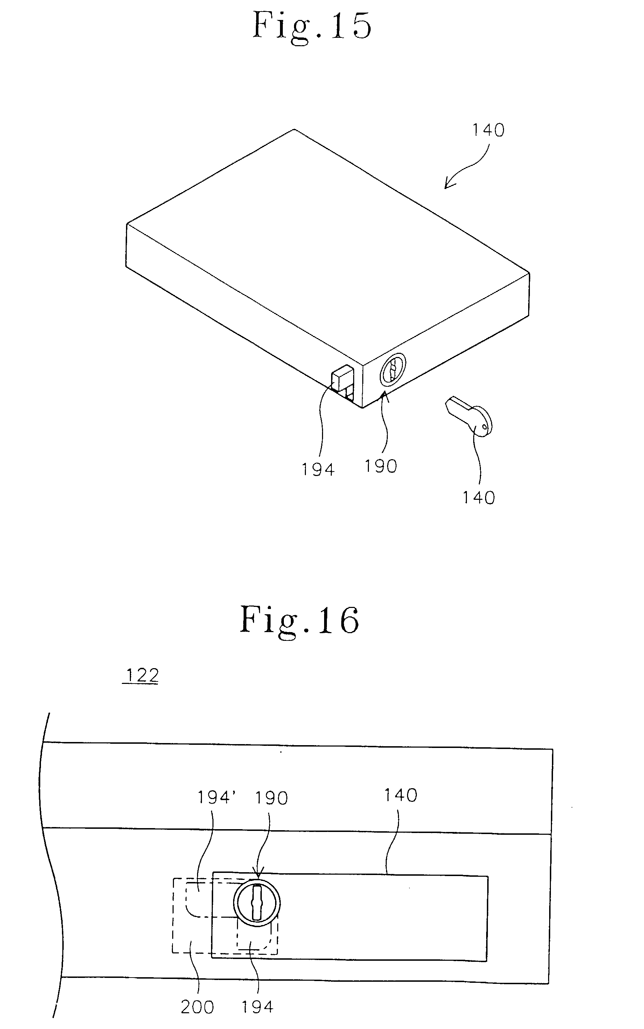

Fig. 15 shows another locking device provided in the module 140 in accordance with this invention. The locking device is installed in the front the module 140 in such a manner that a lock 190 and key 192 are used to fix the module 140 within the main body 122 of the portable computer. A latch 194 is rotatably coupled to the lock 190 and the latch 194 protrudes from the front left side of the module body when it is locked by the key 192. As schematically illustrated by Fig. 16, a groove 200 is formed in the front of the module bay of the main body 122 so that the groove 200 may provide the latch rotating path. Thus, when the module 140 is plugged into the module bay, the latch 194 is movable from the unlocking position to the locking position by turning the key 192 clockwise, and provides for maximum safety that prevents the module 140 from being lost or stolen.

As is apparent from foregoing, the module 140 of the present invention provides a package of the main parts of the portable computer. The CPU and/or video adapter of a portable computer can easily be upgraded by simply exchanging the CPU and video adapter module 140. The cooling fan 170 mounted in the upper part of the module housing 142 drives out heat generated within the housing 142 and introduces air flow passing through the metal housing. Also, the use of aluminum in the module housing 142 can maximize heat dissipation of the CPU and video adapter boards within the module 140. Furthermore, the locking device 180, 190 provided in the module housing 142 provides for relative safety of the expensive CPU and video adapter module 140.

## Claims

1. A computer system comprising a power supply unit, a main board including memory, a system bus and an I/O controller, a CPU board including chipsets and BIOS ROM, a video board including a video controller and video memory and means for electrically connecting the CPU board and the video board to the main board, in which one or both of the CPU board and the video board are incorporated into a module adapted to dock with and detachable from a module bay of the computer system.

2. A computer system according to claim 1 in which the main board further includes a disk controller.

3. A computer system according to claim 1 or claim 2 in which the connecting means includes a first connector adapted to couple the CPU board to the video board and a second connector adapted to couple the CPU board and video board to the main board.

4. A computer system according to any preceding claim in which one or both of the CPU board and the video board are directly coupled to the system bus of the main board through the connecting means.

5. A computer system according to any preceding claim in which one or both of the CPU board and the video board are supplied with their required operating voltages through the connection means.

6. A computer system according to any preceding claim in which the module has a metal housing in which one or both of the CPU board and the video board are housed, an opening is formed in a surface of the housing and a heat dissipation device is mounted on the opening.

7. A computer system according to any preceding claim in which the module includes a locking device adapted to lock the module in place when it is docked with the module bay of the computer system.

8. A computer system according to claim 7 in which the locking device includes a screw which is adapted to be inserted into the module through a part of the computer system and in which a specially shaped groove is formed in a head portion of the screw.

9. A computer system according to claim 7 or claim 8 in which the locking device includes a key-operated lock installed in the module.

10. A computer system as described herein with reference to and as illustrated in FIGs. 8-16 of the accompanying drawings.
